# EUROPÄISCHE PATENTSCHRIFT

(11) **EP 2 473 379 B1**
(45) Veröffentlichungstag und Bekanntmachung des Hinweises auf die Patenterteilung: **13.11.2013**
(21) Anmeldenummer: 10730789.4
(22) Anmeldetag: 08.07.2010
(51) Int. Cl.: B60R 19/02

(54) **ENERGIEABSORBER UND VERFAHREN ZUM EINSTELLEN EINER STEIFIGKEIT EINES ENERGIEABSORBERS**
ENERGY ABSORBER AND METHOD FOR ADJUSTING A STIFFNESS OF AN ENERGY ABSORBER
ABSORBEUR D'ÉNERGIE ET PROCÉDÉ POUR RÉGLER LA RIGIDITÉ D'UN ABSORBEUR D'ÉNERGIE

(30) Priorität: 04.09.2009 DE 102009029212
(43) Veröffentlichungstag der Anmeldung: 11.07.2012
(73) Patentinhaber: Robert Bosch GmbH, 70442 Stuttgart (DE)
(72) Erfinder: FREIENSTEIN, Heiko, 71263 Weil Der Stadt (DE); WEEBER, Kai, 71296 Heimsheim (DE); KOENNING, Markus, 70469 Stuttgart (DE)
(86) Internationale Anmeldenummer: PCT/EP2010/059811
(87) Internationale Veröffentlichungsnummer: WO 2011/026673

(56) Entgegenhaltungen:
- DE-A1- 10 107 873
- DE-A1- 19 852 959
- DE-A1-102004 040 050
- DE-A1-102005 023 915
- DE-A1-102007 059 595

## Beschreibung

### Stand der Technik

Die vorliegende Erfindung bezieht sich auf einen Energieabsorber gemäß Anspruch 1, ein Verfahren zum Absorbieren einer Aufprallenergie gemäß Anspruch 5, ein Steuergerät gemäß Anspruch 7 sowie ein Computerprogrammprodukt gemäß Anspruch 8.

Die DE 198 52 959 A 1 offenbart eine Anordnung eines Frontschutzbügels an einem Kraftwagenbug, der mittels biegesteifer Stangenprofile an tragenden Bauteilen der Kraftwagenkarosserie abgestützt ist. Der Frontschutzbügel ist ausfahrbar und kann im Crashfall eine Verlängerung der Knautschzone des Kraftwagens bewirken.

Aus der DE 10 2004 040 050 A1 ist eine Vorrichtung zum Steuern der Steifigkeit einer Fahrzeugkarosserie bekannt. Diese Vorrichtung umfasst erfindungsgemäß ein angenähert U-förmiges Element, ein Basiselement zum Tragen beider Enden des U-förmigen Elements sowie ein Begrenzungselement zum Begrenzen einer Verformung des U-förmigen Elements in einer zu einer Kollisionslast angenähert orthogonalen Richtung und zum Lösen der Begrenzung.

Aus der DE 101 07 873 A1 ist ein Deformationselement für ein Kraftfahrzeug bekannt, welches bei einem Aufprall effektiv Energie absorbiert und gleichzeitig keinen zusätzlichen Bauraum benötigt. Durch die Verformung des Deformationselements bei einem Aufprall wird Energie absorbiert. Das Deformationselement weist mindestens zwei unterschiedliche Absorptionsstufen auf, die entsprechend der Stärke des zu erwartenden Aufpralls eingestellt werden können, wobei das Deformationselement zwischen zwei zueinander beweglichen, U-förmigen Trageelementen angeordnet ist und zumindest ein Teil des Deformationselements beweglich gelagert ist.

Aus der DE 10 2007 059595 A1 ist ein adaptiver Stoßfänger bekannt, durch seine Anpassungsfähigkeit an die jeweils unterschiedlichen Unfall- bzw. Kollisionsereignisse die auftretenden Energiespitzen effektiver als die derzeit gebräuchlichen Stoßfänger abbauen bzw. in ungefährliche Energieformen umwandeln soll.

Aus der DE 10 2005 023915 A1 ist ein Festigkeitssteuergerät für einen Fahrzeugkörper bekannt, bei dem eine Steuerungseinheit die Kollisionsenergie, die erzeugt wird, wenn ein Fahrzeug mit einem anderen Objekt kollidiert oder in Kontakt tritt, basierend auf verschiedenen Signalen, die von einem externen Sensor und von einem Fahrzeugzustandssensor eingegeben werden, schätzt. Zu einem Zeitpunkt, wenn festgestellt wird, dass die Möglichkeit einer Kollision oder eines Kontaktes zwischen dem Fahrzeug und einem anderen Objekt besteht, oder alternativ zu einem Zeitpunkt, wenn eine Kollision oder Kontakt zwischen dem Fahrzeug und einem anderen Objekt ermittelt wurde, werden Stellglieder in einem Festigkeitsmodus betrieben, der der Festigkeit entspricht, welcher als notwendig für eine Festigkeitsänderungseinrichtung angesehen wird, um die zuvor geschätzte Kollisionsenergie zu absorbieren.

Ferner sind im Bereich der Aufprallabsorption (Crashabsorption) Aufprallabsorber (Crashabsorber), z.B. in Form von Crashboxen, bekannt, die eine definierte Steifigkeit aufweisen. Crashboxen mit definierter Steifigkeit werden heute hauptsächlich eingesetzt, um Anforderungen von AZT-Crashs zu erfüllen. Ebenso sind adaptive Crashboxen bekannt, die auf Basis einer Umfeldsensorik bzw. PreCrash-Sensorik ihre Steifigkeit situationsbedingt ändern können.

Zudem sind Deformationselemente bekannt, die speziell zur Verbesserung des Fußgängerschutzes ihre Steifigkeit reduzieren können.

### Offenbarung der Erfindung

Vor diesem Hintergrund wird mit der vorliegenden Erfindung ein Energieabsorber für ein Fahrzeug, ein Verfahren zum Einstellen einer Steifigkeit eines Energieabsorbers, weiterhin ein Steuergerät das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung betrifft einen regelbaren Energieabsorber oder eine regelbare Crashbox mit mindestens zwei Zuständen, der aufgrund einer internen Sensorik, im oder am Element selbst, die zu erwartende Crashschwere misst und entsprechend der Situation die Steifigkeit des Energieabsorbers gezielt verändert oder anpasst.

Kern der Erfindung ist somit eine Realisierung eines adaptiven Energieabsorbers oder eine adaptiven Crashbox mit einer integrierten Entscheidungssensorik. Dabei kann ein Teil des Energieabsorbers eine regelbare Absorptionsstruktur aufweisen, und ein weiterer Teil über eine Sensiereinheit zur Regelung der Steifigkeit der Absorptionsstruktur verfügen. Diese Adaptivität ermöglicht eine schnelle und für eine definierte Zeit zuschaltbare Versteifung des Vorderwagens und somit eine verkürztes Design des Vorderwagens bei gleicher Schutzwirkung für den Insassen. Dies führt zu einer Verringerung des Gewichts des Fahrzeugs, was sich wiederum positiv auf die CO₂-Bilanz des Fahrzeugs auswirkt. Der erfindungsgemäße Energieabsorber ist unabhängig von einer vorausschauenden Sensorik und lässt sich somit unabhängig hiervon ins Fahrzeug integrieren.

Die vorliegende Erfindung schafft einen Energieabsorber für ein Fahrzeug, mit den Merkmalen des Anspruchs 1.

Der Energieabsorber kann als Crashbox ausgebildet sein und mindestens ein Absorptionselement umfassen. Das mindestens eine Absorptionselement kann ausgebildet sein, um eine auf den Energieabsorber wirkende Aufprallenergie aufzunehmen und abzubauen. Die Aufprallenergie kann beispielsweise aus einem Zusammenprall des Fahrzeugs mit einem Objekt resultieren. Das mindestens eine Absorptionselement kann ein elastisches Element, beispielsweise eine Feder, oder ein plastisches Element, beispielsweise ein Reibungselement oder ein Deformationselement umfassen. Die Aufprallgröße kann eine direkt auf den Energieabsorber wirkende Aufprallkraft oder Aufprallenergie repräsentieren. Der Sensor kann innerhalb oder an dem Energieabsorber angeordnet sein, um die auf den Energieabsorber wirkende Aufprallgröße zur erfassen. Beispielsweise kann der Sensor ausgebildet sein, um eine durch die Aufprallgröße bewirkte Verformung des mindestens einen Absorptionselements zu erfassen und auszuwerten. Somit kann der Sensor ausgebildet sein, um eine Verformung eines Messstreckenelements des Energieabsorbers zu messen. Das Messstreckenelement kann schnell verformbar oder elastisch sein oder eine geringe Steifigkeit aufweisen. Insbesondere kann der Sensor ausgebildet sein, um eine Geschwindigkeit oder Wegstrecke der Verformung direkt am Energieabsorber zu messen. Somit ist der Energieabsorber unabhängig von einer Umfeldsensorik oder weiteren im Fahrzeug angeordneten Sensoren. Der Energieabsorber kann somit ein losgelöstes System darstellen. Der Energieabsorber kann eine Schnittstelle aufweisen, über das eine zusätzliche Information, beispielsweise von einer Umfeldsensorik empfangen werden kann. In diesem Fall kann der Sensor des Energieabsorbers beispielsweise zur Feinjustierung der Steifigkeit eingesetzt werden. Ferner kann die Information über die Aufprallgröße über die Schnittstelle an weitere Fahrzeugsysteme bereitgestellt werden. Der Sensor kann ausgebildet sein, um die Information über die Aufprallgröße in Form eines Sensorsignals direkt an das Einstellelement oder alternativ an eine Steuerung zum Ansteuern des Einstellelements bereitzustellen. Bei dem Einstellelement kann es sich um ein mechanisches Bauteil handeln, mittels dem die Steifigkeit des Energieabsorbers eingestellt werden kann. Dazu kann das Einstellelement beispielsweise die Steifigkeit mindestens eines Absorptionselementes des Energieabsorbers einstellen. Beispielsweise kann die Steifigkeit auf einen hohen Steifigkeitswert eingestellt werden, wenn die Information über die Aufprallgröße eine hohe Aufprallenergie anzeigt. Entsprechend dazu kann die Steifigkeit auf einen niedrigen Steifigkeitswert eingestellt werden, wenn die Information über die Aufprallgröße eine niedrige Aufprallenergie anzeigt.

Der Energieabsorber kann ein erstes Absorptionselement aufweisen und der Sensor kann mit dem ersten Absorptionselement gekoppelt sein, um die Aufprallgröße zu erfassen. Somit kann die Aufprallgröße direkt am Energieabsorber erfasst werden. Das erste Absorptionselement kann an einer Stirnseite des Energieabsorbers angeordnet sein, auf den die Aufprallgröße zuerst einwirkt.

In diesem Fall kann der Sensor in dem ersten Absorptionselement angeordnet sein. Auf diese Weise kann der Sensor Platz sparend und geschützt in den Energieabsorber integriert werden.

Beispielsweise kann das Einstellelement ausgebildet sein, um die hohe Steifigkeit des zweiten Absorptionselements durch eine Verkantung oder Verriegelung zwischen dem ersten und dem zweiten Element zu bewirken. Auf diese Weise lässt sich die hohe Steifigkeit auf eine einfache Weise realisieren. Somit kann es sich bei dem Einstellelement um eine Verkantungselement handeln, das beispielsweise einen oder mehrere Stifte aufweisen kann, deren Position ansprechend auf die Information über die Aufprallgröße verändert werden kann.

Die vorliegende Erfindung schafft ferner ein Verfahren zum Einstellen einer Steifigkeit eines Energieabsorbers, mit folgenden Schritten: Erfassen einer auf den Energieabsorber wirkenden Aufprallgröße; Bereitstellen einer Information über die Aufprallgröße; und Einstellen der Steifigkeit des Energieabsorbers in Abhängigkeit von der Aufprallgröße. Dabei kann die auf den Energieabsorber wirkende Aufprallgröße direkt am Energieabsorber erfasst werden, beispielsweise mittels eines in dem Energieabsorber integrierten Sensors.

Beispielsweise kann die Aufprallgröße basierend auf einer Verformung des Energieabsorbers erfasst werden. Auf diese Weise kann die Steifigkeit des Energieabsorbers unabhängig von einer externen Sensorik eingestellt werden.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines so genannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einer der vorstehend beschriebenen Ausführungsformen verwendet wird, wenn das Programm auf einem Steuergerät ausgeführt wird.

Die Erfindung wird anhand der beigefügten Zeichnungen beispielhaft näher erläutert. Es zeigen:
- Fig. 1: eine schematische Darstellung eines Energieabsorbers in einer Grundstellung, gemäß einem Ausführungsbeispiel der vorliegenden Erfindung;
- Fig. 2: eine schematische Darstellung des erfindungsgemäßen Energieabsorbers bei einer großen Aufprallgröße;
- Fig. 3: eine schematische Darstellung des erfindungsgemäßen Energieabsorbers bei einer kleinen Aufprallgröße;
- Fig. 4: eine Darstellung von Kraftkurven für unterschiedliche Zustände des erfindungsgemäßen Energieabsorbers;
- Fig. 5: ein Blockschaltbild von Komponenten in einem Energieabsorber, gemäß einem Ausführungsbeispiel der Erfindung; und
- Fig. 6: ein Ablaufdiagramm eines Verfahrens, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

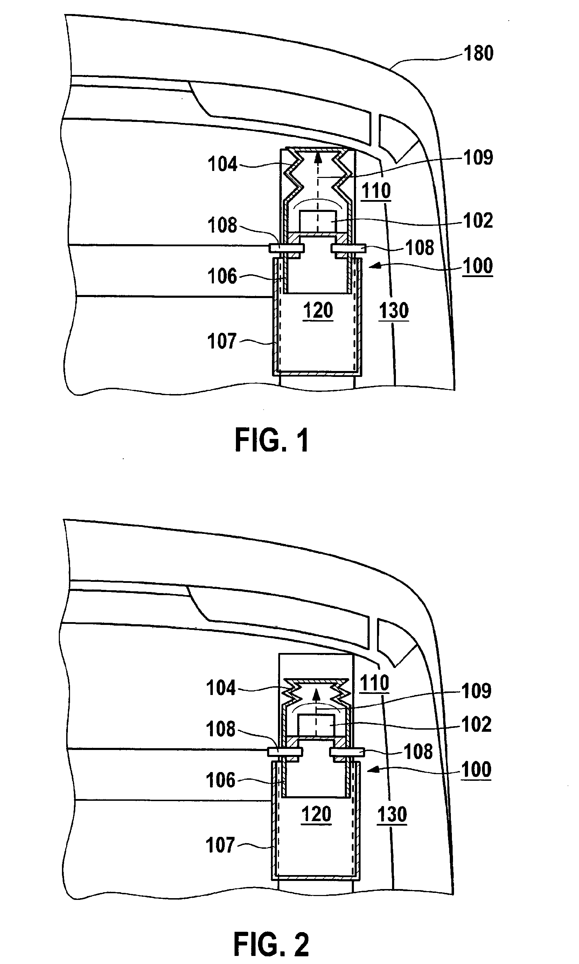

Fig. 1 zeigt eine Darstellung eines Energieabsorbers 100 gemäß einem Ausführungsbeispiel der vorliegenden Erfindung. Der Energieabsorber 100 kann in einem Fahrzeug angeordnet sein und einen Sensor 102, ein erstes Absorptionselement 104 mit einer ersten Steifigkeit, ein zweites Absorptionselement 106, 107 mit einer zweiten Steifigkeit sowie ein Einstellelement 108 umfassen. Dabei kann die erste Steifigkeit geringer als die zweite Steifigkeit sein. Gemäß dem in Fig. 1 gezeigten Ausführungsbeispiel kann der Sensor 102 in dem ersten Absorptionselement 104 angeordnet sein. Der Sensor 102 kann ausgebildet sein, um eine Verformung 109 des ersten Absorptionselements 104, beispielsweise infolge eines Aufpralls eines Objekts auf das Fahrzeug, zu erfassen und als Information über eine Größe der auf den Energieabsorber wirkenden Energie oder Kraft an das Einstellelement 108 bereitzustellen. Das Einstellelement 108 kann ausgebildet sein, um basierend auf der Information die zweite Steifigkeit des zweiten Absorptionselements 106, 107 einzustellen.

Im speziellen zeigt Fig. 1 eine Darstellung eines adaptiven Energieabsorbers oder einer adaptiven Crashbox 100 mit integriertem Sensor 102 im rechten Fahrzeug-Vorderwagen. Dabei kann durch das Bezugszeichen 100 ein Längsträger mit dem adaptiven Energieabsorber bezeichnet sein.

Der adaptive Energieabsorber kann funktional in drei Teile 110, 120, 130 aufgeteilt sein, wobei der erste Teil 110 einen FGS-Bereich, der zweite Teil 120 einen Niedergeschwindigkeits-Bereich (Lowspeed-Bereich) und der dritte Teil 130 einen Hochgeschwindigkeits-Bereich (Highspeed-Bereich) darstellen kann. Der Energieabsorber kann im vorderen Fahrzeugbereich hinter einem Stoßfänger oder einem Querträger 180 angeordnet sein.

Der erste Teil 110 kann einen vollelastischen Bereich darstellen, der beispielsweise als Feder realisiert sein kann. In dem ersten Bereich 110 kann auch die vorausschauende Sensorik 102 integriert sein. Die Sensorik 102 kann beispielsweise als ein Hochfrequenz(HF)-Weg-Sensor, ein Laserscanner, ein kapazitiver Sensor oder als ein beliebiger anderer Sensor realisiert sein, der eine Änderung des Abstands 109 im Verhältnis der Zeit, oder direkt die Geschwindigkeit messen kann. Der zweite Teil 120 kann zwei ineinander gestülpte Komponenten 106, 107 umfassen, die über eine Reibung eine definierte Gegenkraft erzeugen können. Der dritte Teil 130 kann durch die gleichen Rohre 106, 107 gebildet werden. Allerdings werden sie nun ineinander verkantet, beispielsweise durch einen oder mehrere Splints 108, wie es in Fig. 1 gezeigt ist. Dementsprechend kann die Verformung im verkanteten oder verriegelten Modus eine hohe Gegenkraft erzeugen. Die Splints 108 können durch entsprechende Öffnungen des Rohrs 106 geführt werden. Eine Veränderung der Position der Splints 108 kann mittels entsprechender Stellelemente durchgeführt werden, die auf die von dem Sensor 102 bereitgestellte Information ansprechen können.

Zu Beginn eines Aufpralls wird sich die Feder 104 im ersten Bereich 110 je nach Aufprallart und Aufprallschwere unterschiedlich schnell zusammendrücken. Diese Bewegung kann über die Sensorik 102 erfasst und ausgewertet werden. Ansprechend darauf kann die Verriegelung 108 gelöst werden oder nicht. Abhängig davon, ob die Verriegelung 108 gelöst oder nicht gelöst wird, können die Rohre 106, 107 ineinander fahren und die Aufprallenergie durch Reibung abbauen, oder aber sich ineinander verkanten und die Aufprallenergie somit durch eine Verformung abbauen.

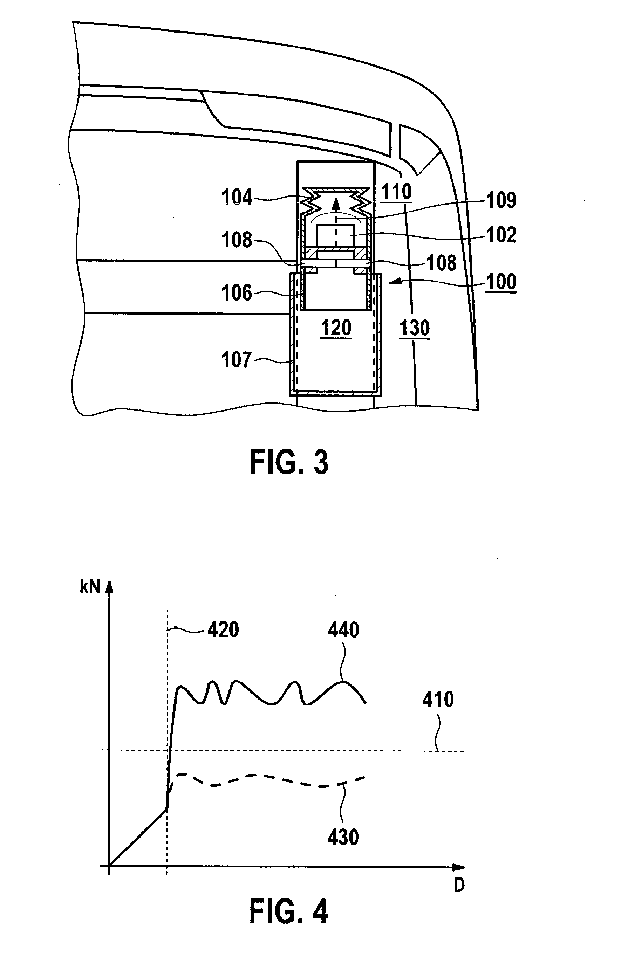

Die Figuren 2 und 3 zeigen eine Darstellung des adaptiven Energieabsorbers 100 aus Fig. 1, wobei in Fig. 2 eine Realisierung mit großer Gegenkraft und in Fig. 3 eine Realisierung mit kleiner Gegenkraft gezeigt ist.

In Fig. 2 ist der Energieabsorber 100 für einen Hochgeschwindigkeits-Aufprall dargestellt. Die elastische Komponente 104 ist durch den Aufprall zusammengedrückt worden, wobei der Sensor 102 über die Wegmessstrecke 109 eine große Aufprallenergie gemessen und eine entsprechende Information bereitgestellt hat. Aufgrund dieser Information verbleiben die Splints 108 in ihrer ausgefahrenen Stellung. In diesem Fall wird der Zustand des Energieabsorbers 100 durch die Information von Sensor 102 nicht verändert, da sich die Splints 108 bereits in der ausgefahrenen Stellung befinden. Durch die Position der Splints kann bei einer fortschreitenden Verformung des Energieabsorbers 100 eine Verkantung der Rohre 106, 107 eintreten. Dadurch, dass die Rohre 106, 107verkantet sind, werden sie sich irreversibel verformen bzw. stauchen und somit eine hohe Energie des Aufpralls aufnehmen.

In Fig. 3 ist der Energieabsorber 100 für einen Niedergeschwindigkeits-Aufprall dargestellt. Entsprechend zu Fig. 2 ist die elastische Komponente 104 durch den Aufprall zusammengedrückt worden, wobei der Sensor 102 über die Wegmessstrecke 109 eine geringere Aufprallenergie gemessen hat, als bei dem in Fig. 2 gezeigten Hochgeschwindigkeits-Aufprall. Aufgrund der von dem Sensor 102 bereitgestellten Information können die Splints 108 ins Innere des Energieabsorbers 100 eingebracht werden, so dass bei fortschreitender Verformung des Energieabsorbers die Rohre 106, 107 ineinandergeschoben werden können. Dabei wirkt als Energieabsorber lediglich die Reibkraft zwischen den Rohren 106, 107. Die Bewegung zwischen den Rohren 106, 107 kann reversibel sein.

Obwohl in den Figuren 1 bis 3 lediglich ein Energieabsorber auf der rechten Fahrzeugfrontseite gezeigt ist, weist ein mit einem derartigen Insassenschutzsystem ausgerüstetes Fahrzeug in Regel einen weiteren bau- und funktionsgleichen Energieabsorber auf der linken Fahrzeugfronseite auf. Ferner kann der erfindungsgemäße Energieabsorber auch an weiteren Positionen des Fahrzeugs eingesetzt werden.
Fig. 4 zeigt eine Darstellung von Kraftkurven für die in den Figuren 2 und 3 beschriebenen Zustände des Energieabsorbers, gemäß einem Ausführungsbeispiel der Erfindung. Gezeigt ist ein Koordinatensystem, wobei auf der Abszisse eine Deformationstiefe D und auf der Ordinate eine Aufprallkraft in kN aufgetragen ist. Auf der Ordinate ist ein Schwellwert 410 für eine Aufprallkraft aufgetragen. Ein weiterer Schwellwert 420 für eine Deformationstiefe ist auf der Abszisse aufgetragen. Der Schwellwert 420 stellt einen Grenzwert zwischen einer elastischen und einer plastischen Verformung dar. Eine Deformationstiefe, die kleiner als der Schwellwert 420 ist, stellt eine elastische Verformung, und eine Deformationstiefe die größer als der Schwellwert 420 ist, stellt eine plastische Verformung des Energieabsorbers dar.

In dem in Fig. 4 gezeigten Koordinatensystem sind Kraftkurven 430, 440 in Abhängigkeit der Deformation aufgetragen. Die Kraftkurve430 stellt eine Kraft-Deformationstiefe-Kurve für einen Niedergeschwindigkeits-Aufprall, also einen Aufprall bei geringer Geschwindigkeit dar, und die Kraftkurve 440 stellt eine Kraft-Deformationstiefe-Kurve für einen Hochgeschwindigkeits-Aufprall, also einen Aufprall bei hoher Geschwindigkeit, beispielsweise größer als 40 km/h, dar.

Aus Fig. 4 ist ersichtlich, dass die Kurven 430 und 440 ab dem Beginn des Aufpralls bis zum Erreichen des Schwellwertes 420 deckungsgleich verlaufen. Dies ist der Bereich, der dem Zusammendrücken des vollelastischen Bereichs des Energieabsorbers entspricht. Der Schwellwert 410 kann die Kraft definieren, deren Überschreitung zu einer Verschiebung der in Fig. 1 gezeigten Splints und somit zu einer Verkantung der Rohre des Reibungselements führen kann. Das Überschreiten des Schwellwerts 410 durch die Kurve 440 markiert somit die Realisierung einer Verkantung der ineinander gestülpten Komponenten des Energieabsorbers, so dass die hohe Aufprallenergie des Hochgeschwindigkeits-Aufprall durch die resultierende Verformung der Komponenten angemessen absorbiert werden kann. Im Falle eines Niedergeschwindigkeits-Aufprall wird die entsprechende Kraftkurve 430 den Schwellwert 410 nicht überschreiten" da die Aufprallenergie durch eine Reibung zwischen den Komponenten aufgenommen wird.

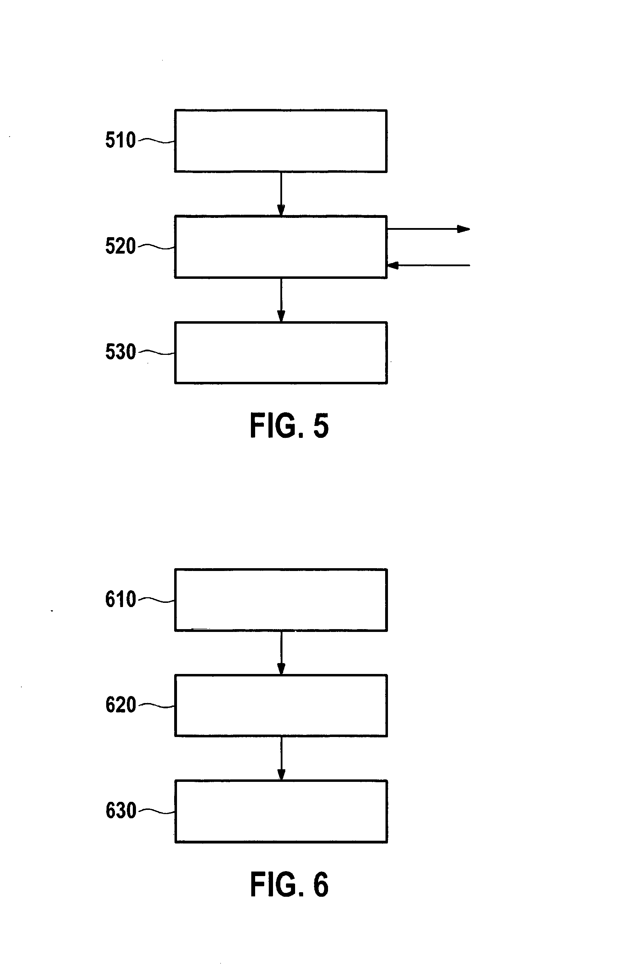

Fig. 5 zeigt ein Blockschaltbild von E/E-Komponenten (Elektrisch/Elektronischen Komponenten) in einem adaptiven Crashabsorber, gemäß einem Ausführungsbeispiel der Erfindung. Gezeigt sind ein Sensor 510, eine Logik 520 sowie eine Steller 530. Die Logik 520 weist eine Schnittstelle zum Ausgeben eines Signals (Out) und zum Empfangen eines Signals (IN) auf.

Der Sensor 510 kann ausgebildet sein, um eine Information über die Aufprallgröße an die Logik 520 bereitzustellen. Die Logik 520 kann ausgebildet sein, um die Information auszuwerten. Dazu kann die Logik 520 beispielsweise ausgebildet sein, um die Aufprallgröße mit dem in Fig. 4 gezeigten Schwellwert zu vergleichen und entsprechend einem Vergleichsergebnis ein Steuersignal an den Steller 530 bereitzustellen, um die Steifigkeit des Energieabsorbers entsprechend der Aufprallgröße einzustellen. Über die Schnittstelle (IN/Out) kann zum einen mit dem adaptiven Crashabsorber der anderen Fahrzeugseite kommuniziert werden. Zum einen können die Zustände der Crashabsorber zum Airbagsteuergerät geschickt werden, um situationsbedingt und/oder zustandsbedingt die Auslöseschwellen für die Rückhaltemittel zu modifizieren. Des Weiteren kann mit Hilfe der Informationen der Sensoren in den adaptiven Crashabsorbern die Upfront-Sensorfunktion realisiert werden. Zudem kann die Information aus den adaptiven Crashabsorbern für weitere Systeme der aktiven und passiven Sicherheit genutzt werden.

Fig. 6 zeigt ein Ablaufdiagramm eines Ausführungsbeispiels der vorliegenden Erfindung als ein Verfahren zum Einstellen einer Steifigkeit eines erfindungsgemäßen Energieabsorbers, der beispielsweise in einem Fahrzeug eingesetzt werden kann. Das Verfahren weist einen ersten Schritt 610 auf, in dem eine auf den Energieabsorber wirkenden Aufprallgröße erfasst werden kann. Das Erfassen der Aufprallgröße kann beispielsweise mittels eines, in oder an dem Energieabsorber angeordneten Sensor erfolgen. Dabei kann eine Information über die Aufprallgröße basierend auf einer Verformung des Energieabsorbers ermittelt werden. In einem darauf folgenden Schritt 620 kann die Information über die Aufprallgröße bereitgestellt werden. In einem anschließenden Schritt 630 kann in Abhängigkeit von der Aufprallgröße die Steifigkeit des Energieabsorbers eingestellt werden. Die Einstellung der Steifigkeit erfolgt im Allgemeinen über eine Steuerung mittels eines Einstellelements. Beispielsweise kann der Energieabsorber abhängig von der Aufprallgröße auf zwei oder mehr unterschiedliche Steifigkeitswerte eingestellt werden.

Die beschriebenen und in den Figuren gezeigten Ausführungsbeispiele sind nur beispielhaft gewählt.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Energieabsorber (100) für ein Fahrzeug, mit folgenden Merkmalen:
einem in dem Energieabsorber integrierten Sensor (102), der ausgebildet ist, um eine auf den Energieabsorber wirkende Aufprallgröße zu erfassen und eine Information über die Aufprallgröße bereitzustellen; und
mindestens einem Einstellelement (108), das ausgebildet ist, um ansprechend auf die Information über die Aufprallgröße eine Steifigkeit des Energieabsorbers einzustellen,
**dadurch gekennzeichnet, dass**
der Energieabsorber (100) ein zweites Absorptionselement (106, 107) aufweist, wobei das Einstellelement (108) ausgebildet ist, um eine Steifigkeit des zweiten Absorptionselements auf eine hohe Steifigkeit oder eine niedrige Steifigkeit einzustellen, wobei
das zweite Absorptionselement ein erstes Element (106) und eine zweites Element (107) aufweist und bei dem sich die niedrige Steifigkeit durch eine Reibung zwischen dem ersten und dem zweiten Element ergibt.

2. Energieabsorber gemäß Anspruch 1, mit einem ersten Absorptionselement (104), wobei der Sensor (102) mit dem ersten Absorptionselement gekoppelt ist, um die Aufprallgröße zu erfassen.

3. Energieabsorber gemäß Anspruch 2, bei dem der Sensor (102) in dem ersten Absorptionselement (104) angeordnet ist.

4. Energieabsorber gemäß Anspruch 1, bei dem das Einstellelement (108) ausgebildet ist, um die hohe Steifigkeit des zweiten Absorptionselements durch eine Verkantung zwischen dem ersten Element (106) und dem zweiten Element (107) zu bewirken.

5. Verfahren zum Einstellen einer Steifigkeit eines Energieabsorbers (100) nach einem der Ansprüche 1-4, mit folgenden Schritten:
Erfassen (610) einer auf den Energieabsorber wirkenden Aufprallgröße;
Bereitstellen (620) einer Information über die Aufprallgröße; und
Einstellen (630) der Steifigkeit des Energieabsorbers in Abhängigkeit von der Aufprallgröße.

6. Verfahren (600) gemäß Anspruch 5, bei dem die Aufprallgröße basierend auf einer Verformung des Energieabsorbers (100) erfasst wird.

7. Steuergerät, das ausgebildet ist, um die Schritte eines Verfahrens gemäß einem der Ansprüche 5 oder 6 durchzuführen.

8. Computerprogrammprodukt mit Programmcode, der auf einem maschinenlesbaren Träger gespeichert ist, zur Durchführung des Verfahrens nach einem der Ansprüche 5 oder 6, wenn das Programm auf einem Steuergerät ausgeführt wird.

## Claims

1. Energy absorber (100) for a vehicle, with the following features:
a sensor (102) which is integrated in the energy absorber and is designed to detect an impact magnitude acting on the energy absorber and to provide information about the impact magnitude; and
at least one adjustment element (108) which is designed to adjust a stiffness of the energy absorber in response to the information about the impact magnitude,
**characterized in that**
the energy absorber (100) has a second absorption element (106, 107), wherein the adjustment element (108) is designed to adjust a stiffness of the second absorption element to a high stiffness or to a low stiffness, wherein
the second absorption element has a first element (106) and a second element (107), and in which the low stiffness arises because of friction between the first element and the second element.

2. Energy absorber according to Claim 1, with a first absorption element (104), wherein the sensor (102) is coupled to the first absorption element in order to detect the impact magnitude.

3. Energy absorber according to Claim 2, in which the sensor (102) is arranged in the first absorption element (104).

4. Energy absorber according to Claim 1, in which the adjustment element (108) is designed to bring about the high stiffness of the second absorption element by means of tilting between the first element (106) and the second element (107).

5. Method for adjusting a stiffness of an energy absorber (100) according to one of Claims 1-4, with the following steps:
detecting (610) an impact magnitude acting on the energy absorber;
providing (620) information about the impact magnitude; and
adjusting (630) the stiffness of the energy absorber depending on the impact magnitude.

6. Method (600) according to Claim 5, in which the impact magnitude is detected on the basis of a deformation of the energy absorber (100).

7. Control device which is designed for carrying out the steps of a method according to either of Claims 5 and 6.

8. Computer program product with a program code which is stored on a machine-readable medium, for carrying out the method according to either of Claims 5 and 6 when the program is executed on a control device.

## Revendications

1. Absorbeur d'énergie (100) pour un véhicule, comprenant les caractéristiques suivantes :
un capteur (102) intégré dans l'absorbeur d'énergie et réalisé de manière à détecter une intensité d'impact agissant sur l'absorbeur d'énergie et à fournir une information concernant l'intensité d'impact ; et
au moins un élément d'ajustement (108) qui est réalisé de manière à ajuster une rigidité de l'absorbeur d'énergie en réponse à l'information concernant l'intensité d'impact,
**caractérisé en ce que**
l'absorbeur d'énergie (100) présente un deuxième élément d'absorption (106, 107), l'élément d'ajustement (108) étant réalisé de manière à ajuster une rigidité du deuxième élément d'absorption à une rigidité élevée ou à une faible rigidité,
le deuxième élément d'absorption présentant un premier élément (106) et un deuxième élément (107), la faible rigidité résultant d'un frottement entre le premier et le deuxième élément.

2. Absorbeur d'énergie selon la revendication 1, comprenant un premier élément d'absorption (104), le capteur (102) étant accouplé au premier élément d'absorption afin de détecter l'intensité d'impact.

3. Absorbeur d'énergie selon la revendication 2, dans lequel le capteur (102) est disposé dans le premier élément d'absorption (104).

4. Absorbeur d'énergie selon la revendication 1, dans lequel l'élément d'ajustement (108) est réalisé de manière à provoquer la rigidité élevée du deuxième élément d'absorption par un coincement entre le premier élément (106) et le deuxième élément (107).

5. Procédé pour ajuster une rigidité d'un absorbeur d'énergie (100) selon l'une quelconque des revendications 1 à 4, comprenant les étapes suivantes :
détection (610) d'une intensité d'impact agissant sur l'absorbeur d'énergie ;
fourniture (620) d'une information concernant l'intensité d'impact ; et
ajustement (630) de la rigidité de l'absorbeur d'énergie en fonction de l'intensité d'impact.

6. Procédé (600) selon la revendication 5, dans lequel l'intensité d'impact est détectée sur la base d'une déformation de l'absorbeur d'énergie (100).

7. Appareil de commande réalisé de manière à mettre en oeuvre les étapes d'un procédé selon l'une quelconque des revendications 5 ou 6.

8. Produit de programme informatique comprenant un code programme mémorisé sur un support lisible en machine, pour mettre en oeuvre le procédé selon l'une quelconque des revendications 5 ou 6, lorsque le programme est exécuté sur un appareil de commande.
